# EUROPÄISCHE PATENTSCHRIFT

(11) **EP 2 976 143 B1**
(45) Veröffentlichungstag und Bekanntmachung des Hinweises auf die Patenterteilung: **07.03.2018**
(21) Anmeldenummer: 14712604.9
(22) Anmeldetag: 24.03.2014
(51) Int. Cl.: B01D 17/02, B01D 17/12

(54) **VORRICHTUNG ZUM ENTWÄSSERN VON FLUIDEN**
APPARATUS FOR DEWATERING FLUIDS
DISPOSITIF SERVANT À DÉSHYDRATER DES FLUIDES

(30) Priorität: 23.03.2013 DE 102013005108
(43) Veröffentlichungstag der Anmeldung: 27.01.2016
(73) Patentinhaber: Hydac Filter Systems GmbH, 66280 Sulzbach/Saar (DE)
(72) Erfinder: BAUER, Martin, 66822 Lebach (DE)
(74) Vertreter: Bartels und Partner, Patentanwälte
(86) Internationale Anmeldenummer: PCT/EP2014/000789
(87) Internationale Veröffentlichungsnummer: WO 2014/154346

(56) Entgegenhaltungen:
- WO-A2-2010/042663
- US-A- 5 211 856

## Beschreibung

Die Erfindung betrifft eine Vorrichtung zum Entwässern von Fluiden, gemäß der Merkmalsausgestaltung des Oberbegriffes des Patentanspruches 1.
Eine derartige Vorrichtung zum Entwässern von Fluiden ist aus WO 2010/042663 A2 bekannt. In der bekannten Vorrichtung ist am dem Wegeventil entgegengesetzten Ende der gemeinsamen Leitung ein weiteres Wegeventil angeordnet, welches die gemeinsame Leitung in einer ersten Stellung mit dem Fluideingang der Entwässerungskammer und in einer zweiten Stellung mit dem Fluidreservoir verbindet. In der jeweils ersten Stellung der beiden Wegeventile ist eine Zuleitung für zu entwässerndes Fluid gebildet, welches vom Fluidreservoir über die gemeinsame Leitung zum Fluideingang der Entwässerungskammer strömen kann. Durch Schalten der beiden Wegeventile in die jeweils zweite Stellung ist eine Ableitung für zumindest teilweise entwässertes Fluid gebildet, welches vom Fluidausgang der Entwässerungskammer über die gemeinsame Leitung zum Fluidreservoir strömen kann. Die wechselweise Zuordnung der gemeinsamen Leitung zur Zuleitung und zur Ableitung ermöglicht einen Aufbau und einen Betrieb der Vorrichtung mit einer einzigen, in der gemeinsamen Leitung angeordneten Fluidpumpe. Weitere Fluidpumpen sind entbehrlich, so dass insgesamt ein einfacher, gewichts- und bauraum- reduzierter Aufbau der Vorrichtung gewährleistet ist.

Demgegenüber stellt sich die Erfindung die Aufgabe, den Aufbau der Vorrichtung zum Entwässern von Fluiden weiter zu vereinfachen und einen wenig störanfälligen, die einzelnen Bauteile wenig belastenden Betrieb der Vorrichtung zu realisieren.

Diese Aufgabe wird gelöst durch eine Vorrichtung mit den Merkmalen des Patentanspruchs 1 in seiner Gesamtheit. Eine erfindungsgemäße Vorrichtung zum Entwässern von Fluiden zeichnet sich dadurch aus, dass am dem Wegeventil entgegengesetzten Ende der gemeinsamen Leitung ein Stromteiler angeordnet ist, der den von der Fluidpumpe kommenden Fluidstrom in einen zum Fluideingang der Entwässerungskammer führenden ersten Teilstrom und in einen zum Fluidreservoir führenden zweiten Teilstrom teilt, und dass unabhängig vom Verunreinigungsgrad des Fluidstroms und in jedem aktiven Betriebszustand der Vorrichtung der Stromteiler in einem fest vorgebbaren Verhältnis den von der Fluidpumpe kommenden Fluidstrom in den ersten und den zweiten Teilstrom aufteilt.

In der erfindungsgemäßen Ausgestaltung der Vorrichtung zum Entwässern von Fluiden entfällt das weitere Wegeventil am dem Wegeventil entgegengesetzten Ende der gemeinsamen Leitung und ist durch einen Stromteiler ersetzt. An diesem Ende ist die gemeinsame Leitung sowohl mit dem Fluideingang der Entwässerungskammer als auch mit dem Fluidreservoir verbunden und führt diesen entsprechende Teilströme zu. In der ersten Stellung des Wegeventils wird zu entwässerndes Fluid aus dem Fluidreservoir in die Entwässerungskammer geführt und zugleich ein Teil des Fluids an der Entwässerungskammer vorbei, also unbehandelt, als zweiter Teilstrom zurück zum Fluidreservoir geführt. In der zweiten Stellung des Wegeventils wird zumindest teilweise entwässertes Fluid als zweiter Teilstrom zurück zum Fluidreservoir geführt und zugleich ein Teil des Fluids als erster Teilstrom der Entwässerungskammer erneut zugeführt. Auf diese Weise ist die Entwässerungsleistung der erfindungsgemäßen Vorrichtung zum Entwässern von Fluiden erhöht. Durch die erfindungsgemäße Ausgestaltung der Vorrichtung zum Entwässern von Fluiden ergibt sich insbesondere der Vorteil, dass die Fluidpumpe konstant betrieben werden kann und folglich im Betrieb der Vorrichtung weniger belastet ist.

Erfindungsgemäß ist weiter vorgesehen, dass unabhängig vom Verunreinigungsgrad des Fluidstroms und in jedem aktiven Betriebszustand der Vorrichtung der Stromteiler in einem fest vorgebbaren Verhältnis den von der Fluidpumpe kommenden Fluidstrom in den ersten und den zweiten Teilstrom aufteilt.

Der Stromteiler teilt den von der Fluidpumpe kommenden Fluidstrom vorzugsweise in einem festen Verhältnis 50 : 50 in den ersten und den zweiten Teilstrom auf, so dass die beiden Teilströme volumenmäßig annähernd gleich sind. Hieraus ergibt sich der Vorteil, dass jeweils die gleiche Fluidmenge der Entwässerungskammer zugeführt und zurück zum Fluidreservoir geführt wird.

Eine besonders schnelle Befüllung der Entwässerungskammer und ein besonders gutes Entwässerungsergebnis werden dadurch erreicht, dass der Stromteiler den von der Fluidpumpe kommenden Fluidstrom im Verhältnis 70 : 30 in den ersten und den zweiten Teilstrom teilt. Hierbei wird in der ersten Stellung, auch Zuleitungsstellung genannt, des Wegeventils lediglich ein Anteil von 30 Volumenprozent des dem Fluidreservoir entnommenen Fluids zurück zum Fluidreservoir geführt. In der zweiten Stellung, auch Ableitungsstellung genannt, des Wegeventils werden 70 Volumenprozent des Fluids zur weiteren Entwässerung der Entwässerungskammer erneut zugeführt und nur 30 Volumenprozent des Fluids als zumindest teilweise entwässertes Fluid zurück zum Fluidreservoir geführt. Es versteht sich, dass die vorstehend genannten Vorteile mit jeglichem festem Teilverhältnis zwischen den beiden Teilströmen erreicht werden, bei welchem der erste Teilstrom größer als der zweite Teilstrom gewählt ist.

Zudem ist es denkbar, am Stromteiler ein fest vorgebbares Teilverhältnis zwischen den beiden Teilströmen zu wählen, wonach der zweite Teilstrom größer als der erste Teilstrom ist. Der Mengenteiler oder Stromteiler erlaubt jedenfalls immer eine gleiche Aufteilung der Fluidmenge unabhängig vom anstehenden, eingangsseitigen Fluiddruck.

In einer bevorzugten Ausführungsform der erfindungsgemäßen Vorrichtung ist mindestens ein Sensor vorgesehen, wobei das Wegeventil in Abhängigkeit der am jeweiligen Sensor erfassten Werte die gemeinsame Leitung mit der darin angeordneten Fluidpumpe mit dem Fluidreservoir oder mit dem Fluidausgang der Entwässerungskammer verbindet. Im Betrieb der erfindungsgemäßen Vorrichtung nimmt das Wegeventil typischerweise zunächst seine der Zuleitung zugeordnete erste Stellung ein, so dass die Entwässerungskammer mit zu entwässerndem Fluid aus dem Fluidreservoir befüllt wird. Nach Befüllen der Entwässerungskammer schaltet das Wegeventil in seine der Ableitung zugeordnete zweite Stellung, so dass zumindest teilweise entwässertes Fluid aus der Entwässerungskammer zurück zum Fluidreservoir geführt wird.

Bevorzugt ist ein die Verschmutzung und/oder den Wassergehalt des Fluids erfassender Sensor vorgesehen, welcher vorzugsweise in die gemeinsame Leitung geschaltet ist. Ein derartiger Sensor erlaubt es, den Wassergehalt des aus dem Fluidreservoir zugeleiteten, zu entwässernden Fluids und des von der Entwässerungskammer kommenden, zumindest teilweise entwässerten Fluids zu bestimmen. Die Schaltung der erfindungsgemäßen Vorrichtung kann derart gewählt sein, dass das Wegeventil bei Erreichen eines unteren Grenzwertes des Wassergehalts aus der zweiten Stellung bzw. Ableitungsstellung zurück in die erste Stellung bzw. Zuleitungsstellung schaltet.

Besonders bevorzugt ist mindestens ein, vorzugsweise zwei, Füllstandssensoren zur Erfassung des in der Entwässerungskammer anstehenden Fluids vorgesehen. Auf diese Weise kann der Füllstand der Entwässerungskammer überwacht werden und diese in der ersten Stellung bzw. Zuleitungsstellung des Wegeventils bis zu einem maximalen Füllstand befüllt werden und in der zweiten Stellung bzw. Ableitungsstellung des Wegeventils bis zu einem minimalen Füllstand entleert werden.

Die Entwässerung des Fluids in der Entwässerungskammer erfolgt zweckmäßigerweise mittels eines das Fluid trocknenden, die Entwässerungskammer gegenläufig zum Fluid durchströmenden Gases. Hierzu ist vorteilhafterweise eine Gaszuführung für trockenes Gas in die Entwässerungskammer und eine Gasabführung für feuchtes Gas aus der Entwässerungskammer vorgesehen.

Weiter ist es vorteilhaft, dass in der Gaszuführung und/oder in der Gasabführung eine Vakuumpumpe angeordnet ist, und dass die Entwässerungskammer als Vakuumkolonne ausgebildet ist. In dieser bevorzugten Ausführung der Erfindung ist eine besonders wirksame Entwässerung des Fluids beim Durchströmen der Entwässerungskammer erreicht.

Weitere Vorteile und Merkmale der Erfindung ergeben sich aus den Figuren und der nachfolgenden Beschreibung der Zeichnung. Erfindungsgemäß können die vorstehend genannten und die weiter angeführten Merkmale jeweils in beliebigen Kombinationen realisiert sein. Die in den Figuren gezeigten Merkmale sind rein schematisch und nicht maßstäblich zu verstehen. Es zeigt:
- Fig. 1: einen Schaltplan einer aus dem Stand der Technik bekannten Vorrichtung zum Entwässern von Fluiden;
- Fig. 2: einen Schaltplan einer erfindungsgemäßen Vorrichtung zum Entwässern von Fluiden;
- Fig. 3: eine Seitenansicht eines Ausführungsbeispiels der erfindungsgemäßen Vorrichtung zum Entwässern von Fluiden; und
- Fig. 4: eine Draufsicht der beispielhaften Vorrichtung aus Fig. 3.

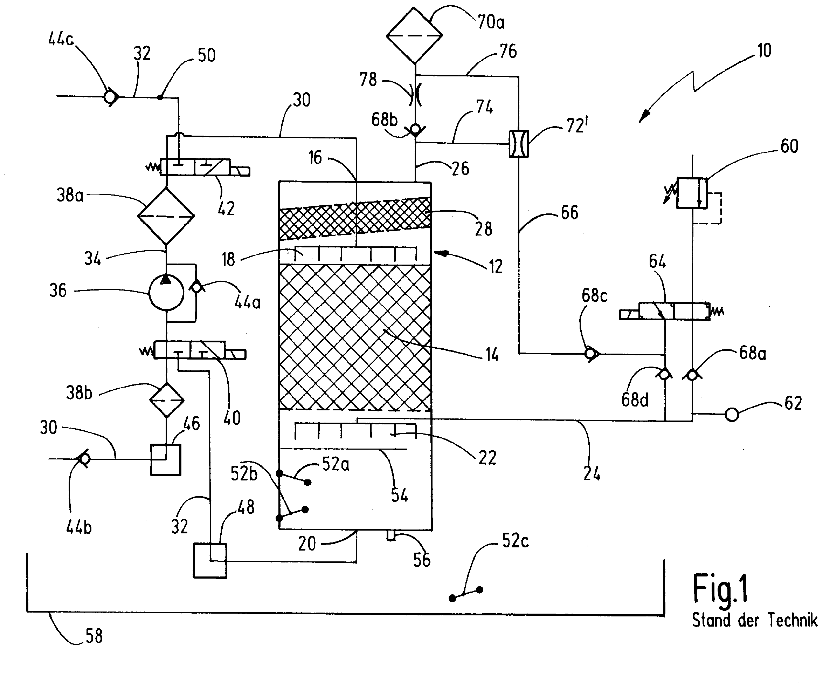

Fig. 1 zeigt den Schaltplan einer aus WO 2010/042663 A2 bekannten Vorrichtung 10 zum Entwässern von Fluiden. Eine Entwässerungskammer 12 der Vorrichtung 10 wird sowohl von zu entwässerndem Fluid als auch von das Fluid trocknendem Gas durchströmt. Hierbei wird das zu entwässernde Fluid oberhalb eines Füllmaterials 14 der Entwässerungskammer 12 zugeführt und trockenes Gas unterhalb des Füllmaterials 14 zugeführt. Das Füllmaterial 14 füllt den Hauptteil der Entwässerungskammer 12 zwischen einem Fluidverteiler 18 für das zugeführte, zu entwässernde Fluid und einem Gasverteiler 22 für das zugeführte, trockene Gas nahezu vollständig aus und ist derart gewählt, den Wasseraustausch zwischen dem wasserhaltigen Fluid und dem trockenen Gas zu fördern. Das am Fluidverteiler 18 zugeführte Fluid durchströmt die Entwässerungskammer 12 und entsprechend das Füllmaterial 14 gravitationsbedingt von oben nach unten. Das am Gasverteiler 22 zugeführte Gas durchströmt die Entwässerungskammer 12 und entsprechend das Füllmaterial 14 dichtebedingt von unten nach oben, also gegenläufig zum Fluid.

Zu entwässerndes Fluid wird von einem in Fig. 1 nicht gezeigten Fluidreservoir über eine Zuleitung 30 zu einem Fluideingang 16 der Entwässerungskammer 12 und von dort weiter zum Fluidverteiler 18 geführt. Der Fluidverteiler 18 ist duschkopfartig ausgebildet, so dass das zu entwässernde Fluid gleichmäßig über die Querschnittsfläche der Entwässerungskammer 12 verteilt zugeführt wird. In entsprechender Weise ist der Gasverteiler 22 duschkopfartig ausgebildet, so dass das trockene Gas, auch Trockengas genannt, ebenfalls gleichmäßig über die Querschnittsfläche der Entwässerungskammer 12 verteilt zugeführt wird. Dem am oberen Ende der Entwässerungskammer 12 angeordneten Fluideingang 16 entgegen gesetzt ist ein Fluidausgang 20 am unteren Ende der Entwässerungskammer 12 angeordnet. Über den Fluidausgang 20 wird zumindest teilweise entwässertes Fluid aus der Entwässerungskammer 12 und über eine sich an den Fluidausgang 20 anschließende Ableitung 32 zurück zum Fluidreservoir geführt. Selbstredend kann das zumindest teilweise entwässerte Fluid zu einem anderen Fluidreservoir geführt werden. Eine Gaszuführung 24 für das trockene Gas ist seitlich in die Entwässerungskammer 12 und weiter zum Gasverteiler 22 geführt. Am oberen Ende der Entwässerungskammer 12 ist eine Gasabführung 26 für feuchtes Gas angeordnet, wobei das feuchte Gas auf dem Weg vom Füllmaterial 14 zur Gasabführung 26 ein im oberen Teil, oberhalb des Fluidverteilers 18, der Entwässerungskammer 12 angeordnetes, der Entfeuchtung dienendes Schaumteil 28 passiert.

Der Zuleitung 30 für zu entwässerndes Fluid und der Ableitung 32 für zumindest teilweise entwässertes Fluid ist wechselweise eine gemeinsame Leitung 34 zugeordnet, in welcher eine Fluidpumpe 36 und ein Fluidfilter 38a angeordnet sind. Parallel zur Fluidpumpe 36 ist ein Rückschlagventil 44a geschaltet. Über ein erstes Wegeventil 40, welches stromaufwärts, d.h. in Fluidförderrichtung betrachtet, vor der Fluidpumpe 36 angeordnet ist, und ein zweites Wegeventil 42, welches stromabwärts, d.h. in Fluidförderrichtung nach, der Fluidpumpe 36 angeordnet ist, ist die gemeinsame Leitung 34 wechselweise in die Zuleitung 30 oder in die Ableitung 32 geschaltet. In der gezeigten jeweils ersten Stellung verbindet das erste Wegeventil 40 das Fluidreservoir mit der gemeinsamen Leitung 34 und das zweite Wegeventil 42 die gemeinsame Leitung 34 mit dem Fluideingang 16 der Entwässerungskammer 12. Somit ist die gemeinsame Leitung 34 in der jeweils ersten Stellung, auch Zuleitungsstellung genannt, der Wegeventile 40, 42 Teil der Zuleitung 30. In der nicht gezeigten jeweils zweiten Stellung verbindet das erste Wegeventil 40 den Fluidausgang 20 der Entwässerungskammer 12 mit der gemeinsamen Leitung 34 und das zweite Wegeventil 42 die gemeinsame Leitung 34 mit dem Fluidreservoir. Somit ist in der jeweils zweiten Stellung, auch Ableitungsstellung genannt, der Wegeventile 40, 42 die gemeinsame Leitung 34 Teil der Ableitung 32. Die Fluidpumpe 36 dient sowohl der Förderung von zu entwässerndem Fluid in der Zuleitung 30 als auch der Förderung von zumindest teilweise entwässertem Fluid in der Ableitung 32. Die Wegeventile 40, 42 sind jeweils als elektrisch betätigbare 3/2-Wegeventile ausgebildet.

Am dem Fluidreservoir zugeordneten Ende der Zuleitung 30 ist ein Rückschlagventil 44b angeordnet. Dem Rückschlagventil 44b nachgeordnet sind ein Sensor 46 zur Erfassung der Verschmutzung und/oder des Wassergehalts des zugeführten, zu entwässernden Fluids und ein Fluidfilter 38b. In der Ableitung 32 kann zwischen der Entwässerungskammer 12 und der gemeinsamen Leitung 34 eine Anzeige 48 zur optischen Kontrolle des zumindest teilweise entwässerten Fluids und/oder zur Funktionsüberwachung der Vorrichtung 10 angeordnet sein. An einem Testpunkt 50, der zwischen der gemeinsamen Leitung 34 und dem Fluidreservoir in der Ableitung 32 angeordnet sein kann, ist der Wassergehalt des zumindest teilweise entwässerten Fluids, beispielsweise mittels eines nicht gezeigten Sensors, zu Testzwecken erfassbar. Am dem Fluidreservoir zugeordneten Ende der Ableitung 32 ist ein Rückschlagventil 44c angeordnet.

Zur Überwachung der Befüllung und der Entleerung der Entwässerungskammer 12 sind Füllstandssensoren 52a, 52b im unteren Teil, unterhalb des Gasverteilers 22, der Entwässerungskammer 12 angeordnet. Ein oberer Füllstandssensor 52a ist einem maximalen Füllstand zugeordnet und gibt ein entsprechendes Signal, die Entwässerungskammer 12 nicht weiter zu befüllen und das erste Wegeventil 40 aus der ersten Stellung bzw. Zuleitungsstellung in die zweite Stellung bzw. Ableitungsstellung zu führen. Sobald das erste Wegeventil 40 in der zweiten Stellung und das zweite Wegeventil 42 weiterhin in der ersten Stellung ist, ist das Fluid in einer Art Kreislauf mehrfach durch die Entwässerungskammer 12 führbar und dort entwässerbar. Mit Schalten des zweiten Wegeventils 42 in die zweite Stellung wird die Ableitung 32 zum Fluidreservoir geöffnet und zumindest teilweise entwässertes Fluid aus der Entwässerungskammer 12 geführt. Ein dem minimalen Füllstand zugeordneter unterer Füllstandssensor 52b gibt ein entsprechendes Signal, kein weiteres Fluid aus der Entwässerungskammer 12 zu entnehmen und zumindest das zweite Wegeventil 42 zurück in die erste Stellung zu schalten.

Das beim Durchströmen des Füllmaterials 14 durch Kontakt mit entgegenströmendem Gas zumindest teilentwässerte Fluid tritt an der Unterseite des Füllmaterials 14 aus diesem aus, strömt am Gasverteiler 22 vorbei und erreicht ein als Ablenkblech ausgebildetes Ablenkteil 54, von welchem es weiter in den unteren Teil der Entwässerungskammer 12 strömt. Von dort kann es über den der Ableitung 32 zugeordneten Fluidausgang 20 oder alternativ, beispielsweise zu Wartungszwecken oder bei Betriebsstörungen, über einen Fluidablauf 56 abgeleitet werden. Über den Fluidablauf 56 gelangt das Fluid in eine Auffangwanne 58, in welcher ein weiterer Füllstandssensor 52c angeordnet ist.

Über einen Gaskompressor 60 wird von außen, d.h. aus der Umgebung, das als Trockenmedium dienende Gas der Gaszuführung 24 zugeführt, wobei der Gasdruck des zugeführten Gases mittels eines Druckmessers 62 überwacht wird. Mittels eines weiteren Wegeventils 64 kann Gas über eine Gasrückführung 66 anstelle des Gaskompressors 60 zur Gaszuführung 24 geleitet werden. In der jeweiligen Zuleitung zur Gaszuführung 24 und in der Gasrückführung 66 ist jeweils ein weiteres Rückschlagventil 68a, 68c, 68d angeordnet. In der Gasabführung 26 sind ein weiteres Rückschlagventil 68b und eine Blende 78 angeordnet, an welche sich ein Gasfilter 70 anschließt, über welchen feuchtes Gas an die Umgebung abgegeben werden kann. Von der Gasabführung 26 zweigen eine erste Leitung 74 und eine zweite Leitung 76 ab zu einer Vakuumeinheit 72', welche als Venturi-Vakuumeinheit ausgebildet ist. Von der Vakuumeinheit 72' führt die Gasrückführung 66 zum weiteren Wegeventil 64, in dessen zweiter Stellung die Gasrückführung 66 mit der Gaszuführung 24 verbunden ist. In dieser zweiten Stellung des weiteren Wegeventils 64 wird Gas in einer Art Kreislauf mehrfach durch die Entwässerungskammer 12 geführt.

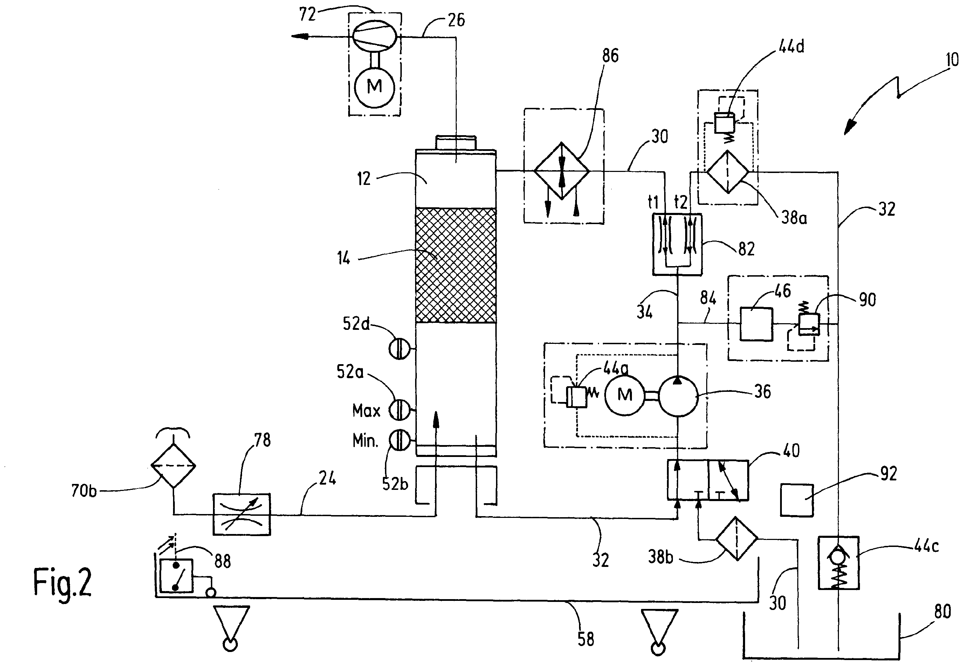

Fig. 2 zeigt einen Schaltplan einer erfindungsgemäßen Vorrichtung 10 zum Entwässern von Fluiden. Der Aufbau der Vorrichtung 10 stimmt zu großen Teilen mit denen der in Fig. 1 gezeigten Vorrichtung 10 überein, wobei in Fig. 2 wesentliche Unterschiede dargestellt und im Folgenden beschrieben sind. Wesentlicher Bestandteil der erfindungsgemäßen Vorrichtung 10 ist ein Stromteiler 82, welcher am dem Wegeventil 40 entgegengesetzten Ende der gemeinsamen Leitung 34 angeordnet ist und den von der Fluidpumpe 36 kommenden Fluidstrom in einen zur Entwässerungskammer 12 führenden ersten Teilstrom t1 und einen zum Fluidreservoir 80 führenden zweiten Teilstrom t2 teilt. Das Teilungsverhältnis zwischen erstem Teilstrom t1 und zweitem Teilstrom t2 ist fest gewählt, wobei vorzugsweise der erste Teilstrom t1 größer als der zweite Teilstrom t2 gewählt ist, um eine sichere Beschickung der Kolonne zu gewährleisten und etwaig auftretendes Totvolumen zu vermeiden.

Die Entwässerungskammer 12 mit dem darin angeordneten Füllmaterial 14 ist als Vakuumkolonne ausgebildet mit der Gaszuführung 24 an der Unterseite und der Gasabführung 26 an der Oberseite. In der Gasabführung 26 ist eine Vakuumpumpe 72 angeordnet. Zur Vakuumeinstellung ist eine variable Blende 78 in der Gaszuführung 24 angeordnet. In der Gaszuführung 24 ist weiter ein Gasfilter 70b, insbesondere ein Luftfilter, zum Abreinigen des der Entwässerungskammer 12 zugeführten Gases angeordnet.

In der gemeinsamen Leitung 34, die wechselweise in die Zuleitung 30 für zu entwässerndes Fluid vom Fluidreservoir 80 zur Entwässerungskammer 12 und in die Ableitung 32 für zumindest teilweise entwässertes Fluid von der Entwässerungskammer 12 zum Fluidreservoir 80 geschaltet ist, ist die Fluidpumpe 36 mit dem zugeordneten, parallel geschalteten Rückschlagventil 44a angeordnet. Der der Fluidpumpe 36 nachgeordnete Fluidfilter 38a ist in dem von der gemeinsamen Leitung 34 zum Fluidreservoir 80 führenden Teil der Ableitung 32 angeordnet und zusätzlich durch ein parallel geschaltetes Rückschlagventil 44d abgesichert. Der Sensor 46 zur Erfassung der Verschmutzung und/oder des Wassergehalts des in der gemeinsamen Leitung 34 geführten Fluids ist in einer von der gemeinsamen Leitung 34 zu dem zum Fluidreservoir 80 führenden Teil der Ableitung 32 führenden dritten Leitung 84 angeordnet und in Reihe mit einem Ventil 90 geschaltet.

In dem von der gemeinsamen Leitung 34 zur Entwässerungskammer 12 führenden Teil der Zuleitung 30 kann eine Temperiereinrichtung 86, insbesondere eine Heizeinrichtung, angeordnet sein, um das der Entwässerungskammer 12 zugeführte Fluid bedarfsgerecht zu temperieren, insbesondere zu erwärmen. Hierzu können die von einem weiteren Sensor 92 erfassten Werte der Umgebungstemperatur berücksichtigt werden. In Fig. 2 ist weiter ein der Auffangwanne 58 zugeordneter Schwimmerschalter 88 sowie ein einem Überlauf zugeordneter dritter Füllstandssensor 52d in der Entwässerungskammer 12 bzw. Vakuumkolonne gezeigt. Die der Entwässerungskammer 12 zugeordneten Füllstandssensoren 52a, 52b, 52d sind Teil einer weiteren Schwimmerschaltung, die in Abhängigkeit des Füllzustandes in der Kolonne die Hydropumpe 36 ebenso betätigen kann wie das Ventil 40, um die Fluidversorgung aus dem Tank 80 sicherstellen zu können.

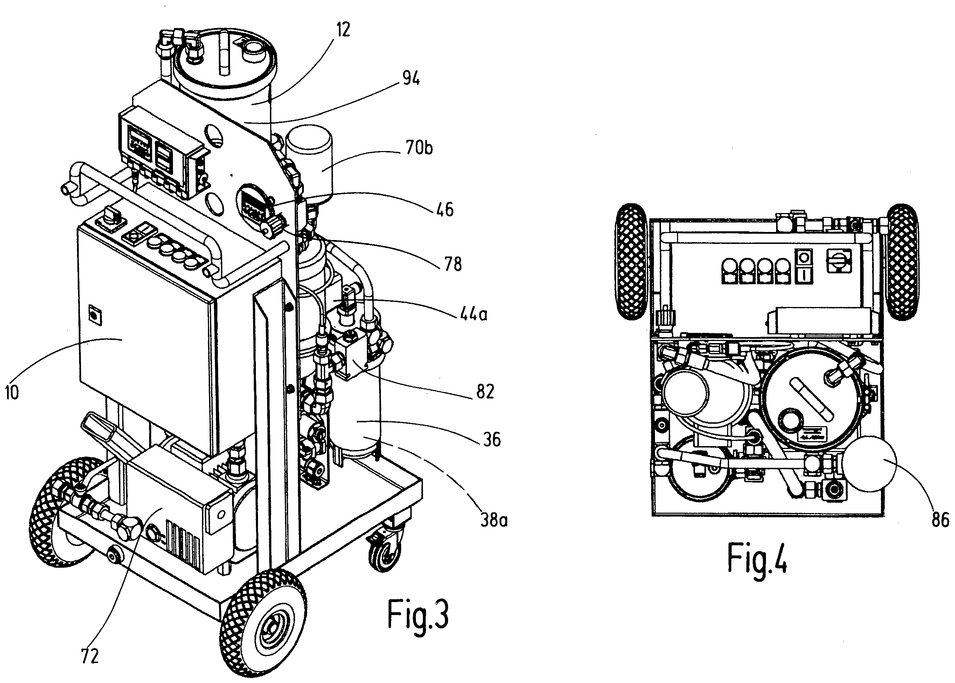

Fig. 3 zeigt in Seitenansicht und entsprechend Fig. 4 in Draufsicht einen beispielhaften konstruktiven Aufbau der Vorrichtung 10 mit einem die Entwässerungskammer 12 vorgebenden zylinderförmigen Gehäuse 94. Außerhalb des Außenmantels des Gehäuses 94 und zu diesem beabstandet sind die Fluidpumpe 36, der Gaskompressor 60 und die Vakuumpumpe 72 angeordnet. Ansonsten beziehen sich die Bezugszeichen in den Fig. 3 und 4 auf die bereits getroffenen Ausführungen. Die Vorrichtung 10 als Ganzes ist als handelbare Einheit ausgebildet und entsprechend den jeweiligen Anforderungen ausgestaltet. Die Vorrichtung kann stationär, vorzugsweise jedoch mittels eines in den Fig. 3 und 4 dargestellten Transportwagens, bevorzugt von Hand verfahrbar ausgestaltet sein, so dass eine Anwendung an verschiedenen Einsatzorten ohne weiteres möglich ist.

## Patentansprüche

1. Vorrichtung (10) zum Entwässern von Fluiden, umfassend:
- eine vom Fluid zur zumindest teilweisen Entwässerung, insbesondere mittels eines das Fluid trocknenden Gases, durchströmbare Entwässerungskammer (12),
- eine Zuleitung (30) für zu entwässerndes Fluid von einem Fluidreservoir (80) zu einem Fluideingang (16) der Entwässerungskammer (12),
- eine Ableitung (32) für zumindest teilweise entwässertes Fluid von einem Fluidausgang (20) der Entwässerungskammer (12) zum Fluidreservoir (80),
- eine wechselweise der Zuleitung (30) und der Ableitung (32) zugeordnete gemeinsame Leitung (34),
- eine in der gemeinsamen Leitung (34) angeordnete Fluidpumpe (36), und
- ein Wegeventil (40), welches die gemeinsame Leitung (34) in einer ersten Stellung mit dem Fluidreservoir (80) und in einer zweiten Stellung mit dem Fluidausgang (20) der Entwässerungskammer (12) verbindet,
- **dadurch gekennzeichnet, dass** am dem Wegeventil (40) entgegengesetzten Ende der gemeinsamen Leitung (34) ein Stromteiler (82) angeordnet ist, der den von der Fluidpumpe (36) kommenden Fluidstrom in einen zum Fluideingang (16) der Entwässerungskammer (12) führenden ersten Teilstrom (t1) und in einen zum Fluidreservoir (80) führenden zweiten Teilstrom (t2) teilt, und dass unabhängig vom Verunreinigungsgrad des Fluidstroms und in jedem aktiven Betriebszustand der Vorrichtung der Stromteiler (82) in einem fest vorgebbaren Verhältnis den von der Fluidpumpe (36) kommenden Fluidstrom in den ersten (t1) und den zweiten Teilstrom (t2) aufteilt.

2. Vorrichtung nach Anspruch 1, **dadurch gekennzeichnet, dass** der Stromteiler (82) den von der Fluidpumpe (36) kommenden Fluidstrom im Verhältnis 50 : 50 in den ersten (t1) und den zweiten Teilstrom (t2) teilt.

3. Vorrichtung nach Anspruch 1, **dadurch gekennzeichnet, dass** der Stromteiler (82) den von der Fluidpumpe (36) kommenden Fluidstrom im Verhältnis 70 : 30 in den ersten (t1) und den zweiten Teilstrom (t2) teilt.

4. Vorrichtung nach einem der vorhergehenden Ansprüche, **dadurch gekennzeichnet, dass** mindestens ein Sensor (46, 52a, 52b) vorgesehen ist, und dass das Wegeventil (40) in Abhängigkeit der am jeweiligen Sensor (46, 52a, 52b) erfassten Werte die gemeinsame Leitung (34) mit der darin angeordneten Fluidpumpe (36) mit dem Fluidreservoir (80) oder mit dem Fluidausgang (20) der Entwässerungskammer (12) verbindet.

5. Vorrichtung nach einem der vorhergehenden Ansprüche, **dadurch gekennzeichnet, dass** ein die Verschmutzung und/oder den Wassergehalt des Fluids erfassender Sensor (46) vorgesehen ist, welcher vorzugsweise in die gemeinsame Leitung (34) geschaltet ist.

6. Vorrichtung nach einem der vorhergehenden Ansprüche, **dadurch gekennzeichnet, dass** mindestens ein, vorzugsweise zwei, Füllstandssensor (52a, 52b) zur Erfassung des in der Entwässerungskammer (12) anstehenden Fluids vorgesehen ist.

7. Vorrichtung nach einem der vorhergehenden Ansprüche, **dadurch gekennzeichnet, dass** eine Gaszuführung (24) für trockenes Gas in die Entwässerungskammer (12) und eine Gasabführung (36) für feuchtes Gas aus der Entwässerungskammer (12) vorgesehen ist.

8. Vorrichtung nach Anspruch 7, **dadurch gekennzeichnet, dass** in der Gaszuführung (24) und/oder in der Gasabführung (26) eine Vakuumpumpe (72) angeordnet ist, und dass die Entwässerungskammer (12) als Vakuumkolonne ausgebildet ist.

## Claims

1. An apparatus (10) for dewatering fluids, comprising:
- a dewatering chamber (12) through which fluid can flow for at least partial dewatering, in particular by means of a gas that dries the fluid,
- a supply line (30) for fluid from a fluid reservoir (80) that is to be dewatered to a fluid inlet (16) of the dewatering chamber (12),
- a discharge line (32) for at least partially dewatered fluid from a fluid outlet (20) of the dewatering chamber (12) to the fluid reservoir (80),
- a common line (34) that is alternately assigned to the supply line (30) and the discharge line (32),
- a fluid pump (36) disposed in the common line (34), and
- a directional valve (40) which connects the common line (34) to the fluid reservoir (80) when in a first position and to the fluid outlet (20) of the dewatering chamber (12) when in a second position,
- **characterised in that** a flow divider (82) is disposed at the end of the common line (34) opposite the directional valve (40), which flow divider divides the fluid flow arriving from the fluid pump (36) into a first sub-stream (t1) leading to the fluid input (16) of the dewatering chamber (12) and into a second sub-stream (t2) leading to the fluid reservoir (80), and that, independently of the degree of contamination of the fluid flow, and in every active operating state of the apparatus, the flow divider (82) divides the fluid flow arriving from the fluid pump (36) into the first sub-stream (t1) and the second sub-stream (t2) at a fixed, definable ratio.

2. The apparatus according to Claim 1, **characterised in that** the flow divider (82) divides the fluid flow arriving from the fluid pump (36) into the first sub-stream (t1) and the second sub-stream (t2) at a ratio of 50:50.

3. The apparatus according to Claim 1, **characterised in that** the flow divider (82) divides the fluid flow arriving from the fluid pump (36) into the first sub-stream (t1) and the second sub-stream (t2) at a ratio of 70:30.

4. The apparatus according to any of the preceding claims, **characterised in that** at least one sensor (46, 52a, 52b) is provided, and that the directional valve (40) connects the common line (34) to the fluid pump (36) disposed therein, to the fluid reservoir (80) or to the fluid outlet (20) of the dewatering chamber (12) depending on the values recorded on the respective sensor (46, 52a, 52b).

5. The apparatus according to any of the preceding claims, **characterised in that** a sensor (46) that registers the contamination and/or the water content of the fluid is provided, which is preferably incorporated into the common line (34).

6. The apparatus according to any of the preceding claims, **characterised in that** at least one, preferably two, filling level sensors (52a, 52b) are provided for registering the fluid present in the dewatering chamber (12).

7. The apparatus according to any of the preceding claims, **characterised in that** a gas supply (24) is provided for supplying dry gas to the dewatering chamber (12) and a gas discharge (36) is provided for removing moist gas from the dewatering chamber (12).

8. The apparatus according to Claim 7, **characterised in that** a vacuum pump (72) is disposed in the gas supply (24) and/or in the gas discharge (26), and **in that** the dewatering chamber (12) is designed as a vacuum tower.

## Revendications

1. Installation (10) de déshydratation de fluide, comprenant :
- une chambre (12) de déshydratation pouvant être parcourue par le fluide pour la déshydratation, au moins en partie, notamment au moyen d'un gaz séchant le fluide,
- un conduit (30) d'amenée pour du fluide à déshydrater, allant d'un réservoir (80) de fluide à une entrée (16) de fluide de la chambre (12) de déshydratation,
- un conduit (32) d'évacuation pour du fluide déshydraté, au moins en partie, allant d'une sortie (20) de fluide de la chambre (12) de déshydratation au réservoir (80) de fluide,
- un conduit (34) commun associé en alternance au conduit (30) d'amenée et au conduit (32) d'évacuation,
- une pompe (36) pour du fluide montée dans le conduit (34) commun et
- une vanne (40) à plusieurs voies, qui relie le conduit (34) commun, dans une première position, au réservoir (80) de fluide et, dans une deuxième position, à la sortie (20) de fluide de la chambre (12) de déshydratation,
- **caractérisée en ce qu'**à l'extrémité, opposée à la vanne (40) à plusieurs voies, du conduit (34) commun, est monté un diviseur (82) de courant, qui sépare le courant de fluide arrivant de la pompe (36) pour du fluide en un premier sous-courant (t1), allant à l'entrée (16) de fluide de la chambre (12) de déshydratation, et en un deuxième sous-courant (t2), allant au réservoir (80) de fluide, et **en ce qu'**indépendamment du degré de pollution du courant de fluide, et dans chaque état de fonctionnement actif de l'installation, le diviseur (82) de courant sépare, en un rapport pouvant être donné à l'avance, le courant de fluide, arrivant de la pompe (36) pour du fluide, en le premier (t1) et en le deuxième (t2) sous-courant.

2. Installation suivant la revendication 1, **caractérisée en ce que** le diviseur (82) de courant sépare le courant de fluide, arrivant de la pompe (36) pour du fluide, dans le rapport 50 : 50, en le premier (t1) et en le deuxième (t2) sous-courant.

3. Installation suivant la revendication 1, **caractérisée en ce que** le diviseur (82) de courant sépare le courant de fluide, arrivant de la pompe (36) pour du fluide, dans le rapport 70 : 30, en le premier (t1) et en le deuxième (t2) sous-courant.

4. Installation suivant l'une des revendications précédentes, **caractérisée en ce qu'**il est prévu au moins un capteur (46, 52a, 52b) et **en ce que** la vanne (40) à plusieurs voies relie, en fonction des valeurs détectées au capteur (46, 52a, 52b) respectif, le conduit (34) commun pour du fluide, avec la pompe (36) pour du fluide qui y est montée, au réservoir (80) de fluide ou à la sortie (20) de fluide de la chambre (12) de déshydratation.

5. Installation suivant l'une des revendications précédentes, **caractérisée en ce qu'**il est prévu un capteur (46) détectant une pollution et/ou la teneur en eau du fluide, qui est monté de préférence dans le conduit (34) commun.

6. Installation suivant l'une des revendications précédentes, **caractérisée en ce qu'**il est prévu au moins un, de préférence deux, détecteurs (52a, 52b) de niveau pour détecter le fluide existant dans la chambre (12) de déshydratation.

7. Installation suivant l'une des revendications précédentes, **caractérisée en ce qu'**il est prévu un conduit (24) d'entrée de gaz sec dans la chambre (12) de déshydratation et un conduit (36) de sortie de gaz humide de la chambre (12) de déshydratation.

8. Installation suivant la revendication 7, **caractérisée en ce qu'**une pompe (72) à vide est montée dans le conduit (24) d'entrée de gaz et/ou dans le conduit (26) de sortie de gaz et **en ce que** la chambre (12) de déshydratation est constituée sous la forme d'une colonne sous vide.
